# EUROPÄISCHE PATENTSCHRIFT

(11) **EP 2 391 469 B1**
(45) Veröffentlichungstag und Bekanntmachung des Hinweises auf die Patenterteilung: **12.11.2014**
(21) Anmeldenummer: 10701526.5
(22) Anmeldetag: 27.01.2010
(51) Int. Cl.: B22F 3/00, B22F 3/105, B29C 67/00

(54) **VORRICHTUNG UND VERFAHREN ZUR HERSTELLUNG UND NACHBEARBEITUNG EINES FORMKÖRPERS**
DEVICE AND METHOD FOR PRODUCING AND MODIFYING A CORPUS
DISPOSITIF ET PROCÉDÉ DE PRODUCTION ET DE POST-TRAITEMENT D'UN CORPS

(30) Priorität: 27.01.2009 DE 102009006189
(43) Veröffentlichungstag der Anmeldung: 07.12.2011
(73) Patentinhaber: Fockele, Matthias, 33178 Borchen (DE)
(72) Erfinder: Fockele, Matthias, 33178 Borchen (DE)
(74) Vertreter: Tiesmeyer, Johannes
(86) Internationale Anmeldenummer: PCT/EP2010/050923
(87) Internationale Veröffentlichungsnummer: WO 2010/086327

(56) Entgegenhaltungen:
- EP-A1- 1 234 625
- EP-A2- 1 839 781
- DE-A1-102004 041 633
- DE-U1- 20 318 721

## Beschreibung

Die Erfindung betrifft eine Vorrichtung zur Herstellung von Formkörpern durch schichtweises ortsselektives Umschmelzen oder ggf. Sintern von Werkstoffpulver zu zusammenhängenden Bereichen des Formkörpers durch Energieeintrag mittels Laserstrahlung,
umfassend
ein Gehäuse mit einem darin befindlichen Prozessraum,
eine in dem Prozessraum angeordnete Arbeitsplattform,
eine Pulverschichtenpräparierungseinrichtung zur Präparierung von aufeinander folgend umzuschmelzenden Werkstoffpulverschichten auf der Arbeitsplattform,
eine Bestrahlungseinrichtung mit einem Laser zur Bestrahlung der jeweils zuletzt auf der Arbeitsplattform präparierten Pulverschicht an den zum Umschmelzen bestimmten Stellen nach Maßgabe von Geometriebeschreibungsdaten des Formkörpers,
eine Handhabungsvorrichtung zur bedarfsweisen Manipulation von Elementen in dem Prozessraum, und
eine Beobachtungseinrichtung zur visuellen Beobachtung von Vorgängen in dem Prozessraum von außerhalb des Gehäuses.

Die Erfindung bezieht sich insbesondere auf das Gebiet des selektiven Laserschmelzens und geht sowohl verfahrensmäßig als auch vorrichtungsmäßig von einer Technologie aus, wie sie z. B. in der DE 199 05 067 A1, in der DE 101 12 591 A1, in der WO 98/24574 oder in der WO 2006/024373 A2 beschrieben ist, wenngleich die Erfindung auch auf das Gebiet des selektiven Lasersinterns anwendbar ist.

Bei der hier betrachteten Technologie geht es um Mittel zur Herstellung von Formkörpern nach dem Prozess des selektiven Laserschmelzens (auch als SLM-Prozess bezeichnet) oder ggf. nach dem Prozess des selektiven Lasersinterns. Dabei erfolgt die Realisierung des betreffenden Formkörpers entsprechend dreidimensionalen CAD-Daten bzw. Geometriebeschreibungsdaten des Formkörpers durch schichtweises Aufbauen aus pulverförmigem, metallischem oder keramischem Werkstoff, wobei nacheinander mehrere Pulverschichten übereinander aufgebracht werden und jede Pulverschicht vor dem Aufbringen der nächstfolgenden Pulverschicht mit einem normalerweise fokussierten Laserstrahl in einem vorgegebenen Bereich, der einem ausgewählten Querschnittsbereich des Formkörpers entspricht, erhitzt wird. Der Laserstrahl wird jeweils entsprechend den CAD-Querschnittsdaten des ausgewählten Querschnittsbereichs des Formkörpers oder entsprechend daraus abgeleiteter Daten über die jeweilige Pulverschicht geführt. Das Werkstoffpulver wird beim selektiven Laserschmelzen als bindemittel- und flussmittelfreies, metallisches, keramisches oder gemischt metallisch/keramisches Werkstoffpulver aufgebracht und durch den Laserstrahl auf Schmelztemperatur erhitzt, wobei die Energie des Laserstrahls und die Laserstrahlführung so gewählt werden, dass das Werkstoffpulver im bestrahlten Bereich über die Pulverschichtdicke möglichst vollständig aufgeschmolzen wird. Über der Zone der Wechselwirkung zwischen dem Laserstrahl und dem metallischen und/oder keramischen Werkstoffpulver wird üblicherweise eine Schutzgasatmosphäre, z. B. Argon-Atmosphäre, aufrechterhalten. Es sind auch schon Versuche unternommen worden, selektives Laserschmelzens in Vakuumatmosphäre vorzunehmen.

Die hier betrachteten SLM-Vorrichtungen werden auch als Rapid-Prototyping-Vorrichtungen oder Vorrichtungen zum selektiven Laserschmelzen bezeichnet. Sie werden zur Herstellung von Prototypen oder auch zur Serienfertigung von Bauteilen, Werkzeugen usw. verwendet. Das Verfahren des selektiven Laserschmelzens und die dazu verwendeten Vorrichtungen sind in den vergangenen Jahren stets weiterentwickelt worden. Dabei hat sich der Anwendungsbereich des selektiven Laserschmelzens aufgrund der offenkundigen großen Flexibilität dieses Verfahrens rasch erweitert, z. B. auf den medizinischen Bereich bei der Herstellung von Prothesen, dentalen Hilfsteilen und Zahnersatz, oder auf den Bereich der Schmuckherstellung. Die Formenvielfalt der mittels des selektiven Laserschmelzens herstellbaren Erzeugnisse ist nahezu unerschöpflich. In der Vergangenheit ist der Trend bei der Entwicklung von Vorrichtungen zum selektiven Laserschmelzen überwiegend in Richtung der Realisierung größerer Maschinen gegangen, die entsprechend größere Formkörper herstellen konnten.

Der vorliegenden Erfindung gingen Überlegungen des Erfinders voraus, ein relativ kleines, kostengünstiges und schnell arbeitendes Gerät für die Herstellung von kleinen Formkörpern bereitzustellen, etwa ein auf einem Labortisch oder dgl. zu betreibendes Tischgerät für die Herstellung von filigranen Teilen, wie Zahnersatzteilen, Schmuckstücken, feinmechanischen Komponenten usw., wobei die Erfindung jedoch nicht nur auf Kleingeräte beschränkt sein soll.

Die nach dem Verfahren des selektiven Laserschmelzens oder selektiven Lasersinterns hergestellten Formteile bedürfen oft einer Nachbearbeitung, sei es, um sie mit anderen Elementen zu verbinden oder/und sie in bestimmten Zonen einem Formänderungs- oder Oberflächenbehandlungsprozess zu unterziehen. Dabei ist es bisherige gängige Praxis, nach Abschluss des Prozesses des selektiven Lasersinterns den Formkörper aus der SLM-Vorrichtung herauszuholen und an eine Nachbearbeitungsstation zu verbringen. Eine solche Nachbearbeitungsstation kann z. B. mit einem Schweißgerät und/oder einem Lötgerät sowie mit diversen Nachbehandlungswerkzeugen und Halterungsmitteln für den nachzubehandelnden Formkörper ausgestattet sein. Die Nachbehandlung kann bei sehr kleinen Formkörpern zweckmäßigerweise unter einer Vergrößerungslupe oder dgl. stattfinden.

Aufgabe der vorliegenden Erfindung ist es, ein flexibel nutzbares System bereitzustellen, welches die Herstellung von Formkörpern nach dem Verfahren des selektiven Laserschmelzens und die Nachbearbeitung solcher Formkörper mit einem verringerten apparativen Aufwand am Arbeitsplatz ermöglicht. Zur Lösung dieser Aufgabe wird eine Vorrichtung der eingangs genannten Art mit folgenden weiteren Merkmalen vorgeschlagen, nämlich dass die Beobachtungseinrichtung wenigstens ein optisches Vergrößerungselement umfasst und auf einen Arbeitsbereich der Handhabungsvorrichtung ausgerichtet bzw. ausrichtbar ist, so dass unter Beobachtung mittels der Beobachtungseinrichtung und unter Verwendung der Handhabungsvorrichtung Nachbearbeitungsschritte an einem im Prozessraum aus Werkstoffpulver hergestellten Formkörper im Arbeitsbereich der Handhabungsvorrichtung vorgenommen werden können, wobei die Beobachtungseinrichtung (64) ein das optische Vergrößerungselement enthaltendes Mikroskop, insbesondere ein Stereomikroskop umfasst.

Die Vorrichtung nach der Erfindung ermöglicht die Nachbearbeitung eines darin nach dem Verfahren des selektiven Laserschmelzens aufgebauten Formkörpers an Ort und Stelle in dem Prozessraum und ggf. unter Verwendung von SLM-Funktionskomponenten. Normalerweise ist der Formkörper nach Abschluss des Aufbauprozesses von nicht umgeschmolzenem Restpulver auf der Arbeitsplattform umgeben. Die Bedienungsperson kann dieses Restpulver mittels der Handhabungsvorrichtung und einem betreffenden Werkzeug oder ggf. einer Pulverabsauganlage entfernen, ohne den Prozessraum öffnen zu müssen.

Als Handhabungsvorrichtung kommt vorzugsweise ein Paar von betreffenden Durchgriffsöffnungen im Prozessraumgehäuse ausgehenden, die Durchgriffsöffnungen nach außen hin abdichtenden und in den Prozessraum hineinreichenden Handschuhen in Frage. Die Bedienungsperson kann diese Handschuhe nutzen, um von außen her Arbeiten im Prozessraum durchzuführen. Als Handhabungsvorrichtung kann ggf. auch wenigstens ein steuerbarer Roboterarm vorgesehen sein, der vorzugsweise Greifmittel aufweist.

Bei dem optischen Vergrößerungselement kann es sich z. B. um eine Lupe und vorzugsweise um ein Stereomikroskop handeln, welches eine präzise Beobachtung der Arbeitsvorgänge im Prozessraum in vergrößerter Darstellung ermöglicht. Wie schon angesprochen, kann die Bedienungsperson mittels der Handschuhe Werkzeuge wie Zangen oder dgl. im Prozessraum ergreifen und unter Beobachtung durch die Lupe bzw. durch das Stereomikroskop zu dem zuvor aufgebauten Formkörper führen, um diesen nachzubearbeiten. Hierzu kann die Arbeitsplattform vorzugsweise vertikal bewegt werden, um den Formkörper, der noch an seinem Basissubstrat auf der Arbeitsplattform fixiert ist, in die richtige Position für einen betreffenden Nachbearbeitungsvorgang zu bringen. Vorzugsweise ist die Arbeitsplattform auch relativ zu dem optischen Vergrößerungselement und der Handhabungsvorrichtung verdrehbar, um den Formkörper zu positionieren.

Die erfindungsgemäß ausgestattete Vorrichtung eignet sich auch hervorragend für Forschungsarbeiten betreffend die Weiterentwicklung des selektiven Laserschmelzens oder selektiven Lasersinterns von Formkörpern.

Mit ganz besonderen Vorteilen lässt sich die Vorrichtung nach der Erfindung unter Ausnutzung der Bestrahlungseinrichtung als steuerbare Laserschweißstrahlquelle verwenden, um einen oder mehrere Formkörper in dem Arbeitsbereich der Handhabungsvorrichtung unter Beobachtung mittels der Beobachtungseinrichtung nachzubearbeiten. Eine solche Nachbearbeitung kann z. B. darin bestehen, dass der Formkörper mit einem anderen Element verschweißt wird. Ein solcher Schweißvorgang kann z. B. Anwendung finden bei der Verbindung von Zahnersatzelementen zu einer dentalen Brücke oder dgl. Die anzuschweißenden Elemente bzw. Formkörper können im Einzelfall auch extern aufgebaut worden sein, etwa in einer anderen SLM-Vorrichtung oder nach einem anderen Herstellungsverfahren, um sie dann in der erfindungsgemäßen Vorrichtung einem Schweißvorgang unter Verwendung des Lasers als Schweißstrahlungsquelle zu unterziehen.

Gemäß einer Weiterbildung der Erfindung weist die Vorrichtung eine Schleuse an dem Prozessraum auf, welche das Einbringen und das Entfernen von Gegenständen in den bzw. aus dem Prozessraum ohne Zerstörung einer darin befindlichen Schutzgasatmosphäre ermöglicht.

Wenngleich Nachbearbeitungsschritte an einem Formkörper vorteilhafterweise in dessen noch vom SLM-Aufbauprozess her fixierter Anordnung auf der Arbeitsplattform vorgenommen werden und der Arbeitsbereich der Handhabungsvorrichtung die Arbeitsplattform zentral umfasst, kann gemäß einer Weiterbildung der Erfindung eine gesonderte Halterungseinrichtung für nachzubehandelnde Formkörper im Arbeitsbereich der Handhabungseinrichtung vorgesehen sein. Dies kann insbesondere eine Klemmeinrichtung im Prozessraum sein, die eine gesteuerte Änderung der Orientierung des Formkörpers ermöglicht. So kann auf diese Weise bei unbewegt gehaltenem Laserstrahl der Formkörper in vorbestimmten Orientierungen dem Laserstrahl ausgesetzt werden, um einen Schweißprozess durchzuführen. In vorteilhafter Weise ist jedoch die Bestrahlungseinrichtung mit einer automatisch und/oder manuell steuerbaren Strahlausrichtungseinrichtung ausgestattet, mittels welcher die Ausrichtung des Laserschmelzstrahls im Prozessraum steuerbar ist, um einen unbewegten Formkörper an verschiedenen Stellen zu schweißen und so z.B. an der Oberfläche zu bearbeiten bzw. die Oberfläche zu veredeln. Eine weitere Ausgestaltung der Erfindung ermöglicht sowohl die Änderung der Orientierung des nachzubearbeitenden Formkörpers im Prozessraum durch entsprechende Bewegungen und Einstellungen der Halterungseinrichtung als auch eine Bewegung des Laserstrahls relativ zum Formkörper, so dass der Formkörper nahezu an jeder gewünschten Stelle seiner Oberfläche mittels des Laserstrahls schweißbar ist. Dies kann unter Verwendung von Schweißzusatzmaterial, etwa einem Schweißdraht oder auch dosiertes und nur örtlich oder ggf. flächig aufgebrachtes Werkstoffpulver eines gewünschten Materials, erfolgen oder ggf. auch ohne Schweißzusatzwerkstoff nur durch erneutes Aufschmelzen des Formkörpermaterials vonstatten gehen.

Eine Formkörperherstellungsvorrichtung nach der Erfindung kann als Tischgerät, d.h. auf einem Labortisch oder Schreibtisch üblicher Größe betreibbares und insbesondere von einer an dem Tisch sitzenden Bedienungsperson in Sitzhaltung bedienbares Gerät ausgebildet sein. Insbesondere sollte die Bedienungsperson in ihrer Sitzposition die Beobachtungseinrichtung, also z. B. ein Stereomikroskop, bestimmungsgemäß benutzen können, um den Prozess im Prozessraum zu beobachten.

Ferner kann eine Formkörperherstellungsmaschine nach der Erfindung, die im einfachsten Fall ohne Handhabungseinrichtung und ohne Beobachtungseinrichtung realisierbar ist, jedoch automatische bzw. vorprogrammierte Nachbehandlungsschritte unter Verwendung der Bestrahlungseinrichtung als steuerbare Laserschweißstrahlungsquelle durchführen.

Derartige Nachbehandlungsschritte kommen für den im Übrigen zumindest grob vollständig aufgebauten Formkörper in Frage, aber auch für bereits fertiggestellte Abschnitte des Formkörpers während des Bauprozesses. Die Vorrichtung zum Herstellen von Formkörpern nach der Erfindung kann dazu eingerichtet und programmierbar sein, dass sie in einem Modus spannungsarmer Fertigung wenigstens einen Spannungsunterbrechungsspalt nicht umgeschmolzenen bzw. gesinterten Werkstoffpulvers innerhalb eines im Übrigen durch schichtweises selektives Umschmelzen oder ggf. Sintern von Werkstoffpulver erzeugten Bereiches des Formkörpers über eine bestimmte Anzahl von aufeinander folgenden Schichten hinweg temporär belässt und danach in einem jeweiligen Nachbehandlungsschritt durch Verschweißen mittels der Bestrahlungseinrichtung schließt. Das Verschließen erfolgt vorzugsweise, nachdem sich der betreffende Bereich beiderseits des Spannungsunterbrechungsspaltes unter eine bestimmte Temperatur hinaus abgekühlt hat. Nach dem Verschließen des Spannungsunterbrechungsspaltes ist dieser verschwunden und strukturell homogen mit dem betreffenden Bereich vereinigt. Danach kann dann eine weitere Pulverschicht aufgetragen werden und der SLM-Prozess oder ggf. Sinterprozess fortgesetzt werden, wobei eine neue Pulverschicht zunächst aufgebracht wird, die dann ortsselektiv verfestigt wird. Dabei kann erneut wenigstens ein Spannungsunterbrechungsspalt im vorstehend erläuterten Sinne vorgesehen werden, der sich dann über mehrere Schichten hinweg im weiteren Verlaufe des Bauprozesses erstrecken kann, bis er durch einen erneuten Nachbehandlungsschritt mit dem Strahl des Bestrahlungslasers zugeschweißt wird. Der Verlauf der Spannungsunterbrechungsspalte in den jeweiligen Bereichen kann von verschiedenen einzustellenden Parametern des Herstellungsprozesses und insbesondere von der Form des herzustellenden Formkörpers abhängen, wobei die Tiefe und der Verlauf der Spannungsunterbrechungsspalte jeweils so gewählt werden können, dass Wärmespannungseffekte möglichst geringe Wirkung auf die Formhaltigkeit des herzustellenden Formkörpers und somit möglichst wenig Schrumpfung und Verzug bewirken. Die Spannungsunterbrechungsspalte sollten vorzugsweise mehrere Bauschichten tief erzeugt werden, bevor der Nachbehandlungsschritt des jeweiligen Verschließens des Spannungsunterbrechungsspaltes eingeschoben wird. Die Spannungsunterbrechungsspalt-Querschnitte können z. B. Rechteckform, Dreieckform mit unten liegender Spitze oder Bogenmuldenform haben.

Beim Verschließen schmilzt der Laserstrahl das in dem Spannungsunterbrechungsspalt verbliebene Werkstoffpulver über die erforderliche Anzahl von Schichten auf, um den Spannungsunterbrechungsspalt zu beseitigen und das Material dort möglichst strukturell homogen mit den benachbarten Zonen zu vereinigen. Der Bauprozess unter Einbeziehung der Erzeugung und Beseitigung von Spannungsunterbrechungsspalten zur Unterdrückung der Ausbreitung von Materialspannungen über Zonen des Formkörpers hinweg kann vorzugsweise vollautomatisch unter Kontrolle der Steuereinrichtung der Vorrichtung erfolgen.

Bei einem mit der erfindungsgemäßen Vorrichtung durchführbaren Verfahren zur Nachbearbeitung eines Formkörpers können aufeinander folgende Schichten von Werkstoffpulver auf einer Arbeitsplattform in einem Prozessraum präpariert werden und jede Werkstoffpulverschicht kann einem ortsselektiven Umschmelzen oder ggf. Sintern des Werkstoffpulvers zu zusammenhängenden Bereichen des Formkörpers durch Energieeintrag mittels Laserstrahlung einer steuerbaren Bestrahlungseinrichtung an den zum Umschmelzen bestimmten Stellen der jeweiligen Pulverschicht nach Maßgabe von Geometriebeschreibungsdaten des Formkörpers unterzogen werden, wobei nach dem Aufbau des Formkörpers aus dem Werkstoffpulver dieser im Prozessraum einer Nachbearbeitung durch einen Schweißvorgang unterzogen wird, bei dem die Bestrahlungseinrichtung als Laserschweißstrahlquelle verwendet wird.

Vor dem Durchführen der Nachbearbeitung wird vorzugsweise nicht umgeschmolzenes Restwerkstoffpulver von der Arbeitsplattform entfernt. Die Nachbearbeitung erfolgt dann vorzugsweise an dem auf der Arbeitsplattform noch fixierten Formkörper.

Der Nachbearbeitungsschritt kann das Verschweißen des Formkörpers mit einem weiteren Formkörper umfassen.

Beim Aufbau des Formkörpers aus dem Werkstoffpulver können partielle Unterbrechungen im Volumen des Formkörpers, wie Spalten oder Kerben, zwischen benachbarten Zonen des Formkörpers vorgesehen sein, um die Ausbreitung von Materialspannungen über die Zonen hinweg zu unterdrücken, wobei der Nachbearbeitungsschritt das zumindest partielle Schließen solcher Unterbrechungen durch Verschweißen umfasst.

Die Vorrichtung nach der Erfindung eignet sich insbesondere für die Herstellung von Zahnersatzelementen oder Zahnersatzhilfselementen.

Ein Ausführungsbeispiel der erfindungsgemäßen Vorrichtung wird im Folgenden unter Bezugnahme auf die Figuren näher erläutert.
- Fig. 1: zeigt im einer perspektivischen Darstellung mit Sicht auf die Vorderseite eine Vorrichtung nach der Erfindung.
- Fig. 2: zeigt die Vorrichtung aus Fig. 1 in einer entsprechenden Perspektive, jedoch mit entfernten Außengehäuseteilen und Komponenten.
- Fig. 3: zeigt ein Prozessraumgehäuse der Vorrichtung aus den Figuren 1 und 2 mit abgenommenem Prozessraumgehäusedeckel in einer perspektivischen Darstellung mit Sicht von oben.
- Fig. 4: zeigt das Prozessraumgehäuse aus Fig. 3 aus einer seitlichen Perspektive mit zusätzlich entfernten Seitenwänden.
- Fig. 5: zeigt in einer der Fig. 2 ähnlichen Ansicht die von Außengehäuseteilen und weiteren Komponenten befreite Vorrichtung aus Fig. 1.
- Fig. 6 und 7: zeigen in einer schematischen Darstellung zwei Stufen der Formkörperherstellung und -nachbearbeitung auf einer Arbeitsplattform der Vorrichtung nach der Erfindung.
- Fig. 8a: zeigt in einer Ausschnittsdarstellung das stirnseitige freie Ende einer auch in Fig. 4 erkennbaren Pulverschichtenpräparierungseinrichtung.
- Fig. 8b: zeigt ein vergrößertes Detail aus Fig. 8a.

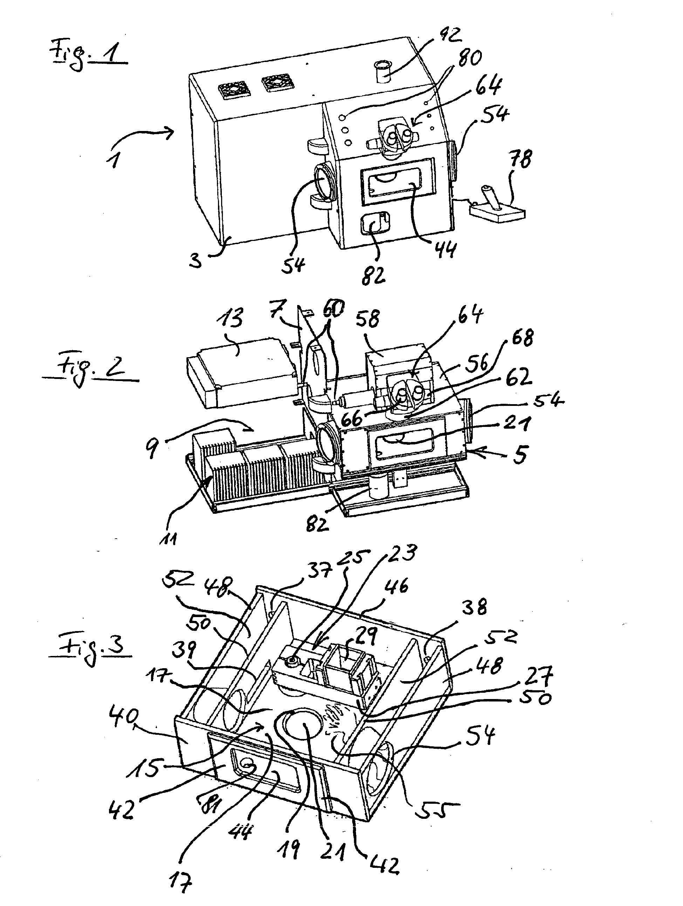

Fig. 1 zeigt eine erfindungsgemäße SLM-Vorrichtung zur Herstellung und Nachbearbeitung von Formkörpern. Im Beispielsfall ist die Vorrichtung als Tischgerät mit einer Breite von ca. 800 mm, einer Höhe von ca. 500 mm und einer maximalen Tiefe von ca. 500 mm ausgebildet. Es dient zur schnellen und präzisen Herstellung von relativ kleinen Formkörpern, insbesondere von Zahnersatzteilen, wie Kronen, Brücken und dgl. Das Tischgerät 1 hat ein Außengehäuse 3, welches ein Prozessraumgehäuse 5 mit noch zu erläuternden Anbauten und einen vom Prozessraumgehäuse 5 durch eine zentrale Trennwand 7 separierten Raumbereich 9 enthält, in dem elektrische und elektronische Komponenten des Gerätes 1 und ein Faserlaser 13 untergebracht sind. Die elektronischen Komponenten umfassen auch einen Steuerungsrechner mit der Möglichkeit des Internetanschlusses für den Datenanschluss mit externen Datenquellen und/oder der Fernsteuerung und/oder Überwachung der Arbeitsweise des Gerätes 1.

Das Prozessraumgehäuse 5 begrenzt abdichtend den eigentlichen Prozessraum 15 für den Aufbau von Formkörpern durch schichtweises ortsselektives Umschmelzen von Werkstoffpulver zu zusammenhängenden Bereichen des Formkörpers durch Energieeintrag mittels Laserstrahlung. Der Boden 17 des Prozessraums 15 weist eine zylindrische Führung 19 für die vertikal bewegbare Arbeitsplattform 21 auf.

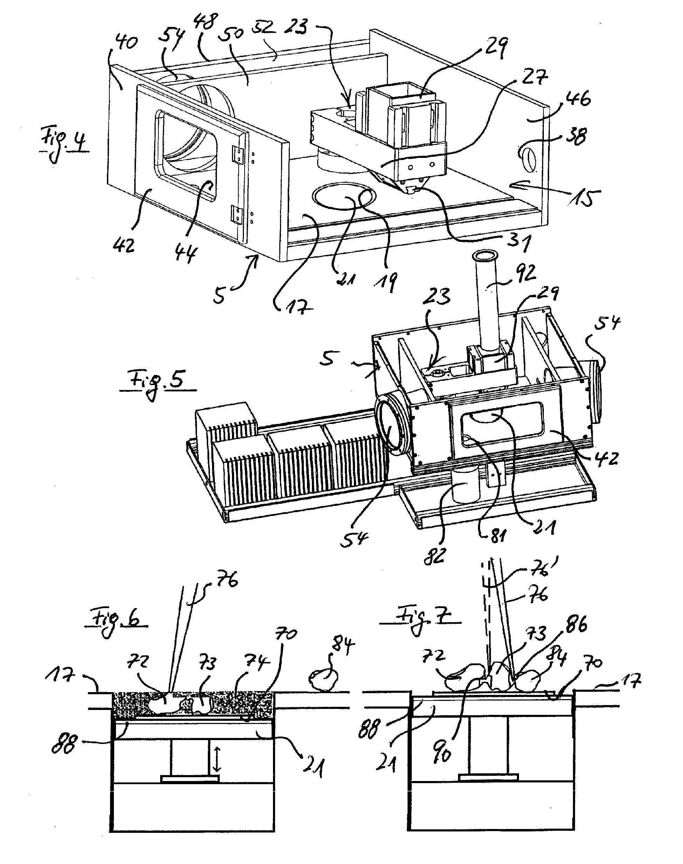

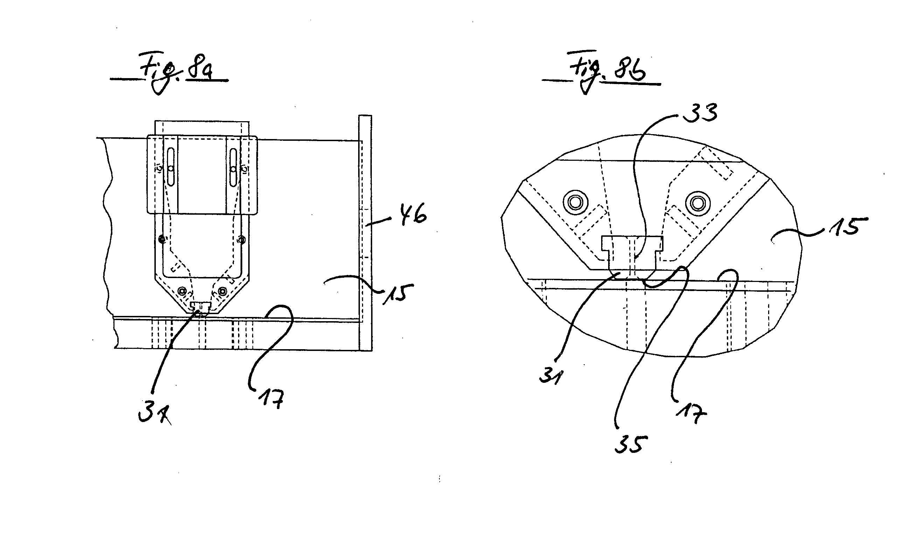

In dem Prozessraum befindet sich ferner eine Pulverschichtenpräparierungseinrichtung 23, die im Beispielsfall mit einem um die vertikale Schwenkachse 25 über die Arbeitsplattform 21 hinweg verschwenkbaren Trägerarm 27, der einen von oben befüllbaren Pulverspender 29 trägt. Der Pulverspender 29 weist an seinem unteren Ende eine aus Silikon, Gummi oder einem ähnlichen Material hergestellte Glättungsschieberleiste 31 (vgl. Fig. 4, 8a, 8b) auf, deren Unterseite parallel zum Prozessraumboden 17 diesem eng benachbart gegenüberliegend verläuft. An der Unterseite des Pulverspenders 29 ist ferner wenigstens eine Pulverabgabeöffnung vorgesehen, durch die hindurch Werkstoffpulver zur Beschichtung der Arbeitsplattform 21 nach unten hin abgebbar ist. Eine solche Pulverschichtenpräparierungseinrichtung ist z. B. aus der EP 1 839 781 A2 bekannt. Neu an der Pulverschichtenpräparierungseinrichtung 23 bei dem gezeigten Ausführungsbeispiel der vorliegenden Erfindung ist es, dass die Pulverabgabeöffnungen als Kanäle 33 (vgl. Fig. 8b) in der Glättungsschieberleiste 31 ausgebildet sind. Im Beispielsfall handelt es sich um mehrere vertikale, die Glättungsschieberleiste 31 durchsetzende und dicht nebeneinander liegende Pulverabgabekanäle mit z. B. Kreisquerschnitt. Die Form der Kanäle kann von denen des gezeigten Ausführungsbeispiels durchaus abweichen. So können z. B. konische Pulverabgabekanäle oder Pulverabgabekanäle mit ovalem oder rechteckigem Querschnitt vorgesehen sein. Ferner kann es abweichend vom gezeigten Ausführungsbeispiel vorgesehen sein, dass verschiedene Pulverabgabekanäle unterschiedliche Pulvermaterialien abgeben, wobei die Abgabe vorzugsweise steuerbar ist.

Da die Unterseite 35 der Glättungsschieberleiste 31 in der in Fig. 8a, 8b gezeigten Stellung quasi auf dem Boden 17 des Prozessraumes 15 aufliegt, sind die Kanäle 33 nach unten hin normalerweise durch den Prozessraumboden 17 geschlossen, so dass der Pulverspender 29 kaum Pulver verliert, solange er mit seiner Glättungsschieberleiste 31 nicht unmittelbar über der Arbeitsplattform 21 liegt, welche gegenüber dem horizontalen Basisniveau des Bodens 17 beim Aufbau eines Formkörpers um eine jeweilige Arbeitspulverschichtdicke abgesenkt ist bzw. jeweils weiter abgesenkt wird.

Das Prozessraumgehäuse 5 weist ferner Anschlüsse 37, 38 und Durchlassöffnungen 39 für die Einleitung von Schutzgas in den Prozessraum 15 und zur Ableitung von Gas aus dem Prozessraum 15 auf. Die Anschlüsse 37, 38 sind nicht im Detail mit ihren Anschlussmitteln, sondern lediglich als Öffnungen schematisch dargestellt. Der Bauprozess eines Formkörpers nach dem SLM-Verfahren erfolgt mittels der Vorrichtung nach der Erfindung vorzugsweise unter Schutzgasatmosphäre. Zur Herstellung der Schutzgasatmosphäre wird an einem nicht gezeigten Spülanschluss Schutzgas mit einem relativ hohen Druck von z. B. 3 bar in den Prozessraum eingebracht. Das Schutzgas verdrängt die zunächst noch im Prozessraum befindliche Luft durch ein an einem nicht gezeigten Entlüftungsanschluss vorgesehenes Überdruckventil nach außen. Der Einlassdruck des Schutzgases ist so angepasst, dass er über dem Ansprechdruck des Überdruckventils liegt. Durch einen (nicht gezeigten) Sauerstoffsensor kann überwacht werden, ob der Sauerstoffanteil im Prozessraum hinreichend abgesenkt und somit eine ausreichend gute Schutzgasatmosphäre hergestellt worden ist. Es hat sich in der Praxis gezeigt, dass ein solcher Spülschritt zur Herstellung einer für den Bauprozess günstigen Schutzgasatmosphäre innerhalb weniger Sekunden durchgeführt werden kann.

Bei dem Schutzgas handelt es sich z. B. um Argon. Die Schutzgasquelle, z. B. eine externe Gasflasche für die Einspeisung von Frischgas, ist in den Figuren nicht dargestellt. Die Vorrichtung kann eine integrierte Feuerlöschanlage mit dem Schutzgas als Löschmedium aufweisen. Dies kann insbesondere bei der Verwendung von brennbaren oder entzündlichen Pulvern im Prozessraum von großer Bedeutung sein.

Das Prozessraumgehäuse 5 ist als sog. Handschuhbox ausgebildet. Es hat im Beispielsfall eine Frontwand 40 mit einer Türe 42 und einem darin vorgesehenen Beobachtungsfenster 44. Es hat ferner eine Rückwand 46 mit den Gaszufuhr- und -ableitungsöffnungen (bei 37 und 38). Die seitlichen Begrenzungen sind durch eine jeweilige äußere Seitenwand 48 und eine innere Seitenwand 50 gebildet, wobei zwischen innerer und äußerer Seitenwand 48, 50 jeweils ein Zwischenraum 52 vorgesehen ist. Öffnungen 39 in den inneren Seitenwänden 52 erlauben einen Gasdurchtritt und eine gleichmäßige Kanalisierung eines Gasstromes im Prozessraum 15 für den Fall, dass mit kontinuierlichem Gasdurchfluss vorzugsweise im Schutzgaskreislauf gearbeitet werden soll. Wie in Fig. 3 erkennbar, erfolgt die Gaszufuhr bei 37 zunächst in einen Zwischenraum 52 und dann durch die Durchtrittsöffnung 39 hindurch in den Prozessraum 15 hinein. Der Zwischenraum kann z. B. ein Reinigungsfilter für das Schutzgas oder/und eine das Schutzgas im Kreislauf durch den Prozessraum 15 fördernde Pumpe enthalten.

Das Gas kann durch eine (in den Figuren nicht erkennbare) Öffnung in der in Fig. 3 rechts liegenden Innenseitenwand 50 aus dem Prozessraum 15 ausströmen und über den betreffenden Zwischenraum 52 zur Auslassöffnung 38 gelangen. Es sei an dieser Stelle darauf hingewiesen, dass die doppelwandige Ausgestaltung der seitlichen Begrenzungen des Prozessraumgehäuses 5 nur eine spezielle Variante der hier erörterten SLM-Vorrichtung ist. In einer alternativen Ausgestaltung weist das Prozessraumgehäuse 5 die Innenseitenwände 50 nicht auf.

In den Seitenwänden 48, 50 sind nahe der Frontwand 40 Durchgriffsöffnungen 54 vorgesehen, die nach außen hin durch einen linken und einen rechten Handschuh abgedichtet sind. In Fig. 3 ist nur einer der Handschuhe bei 55 angedeutet. Eine Bedienungsperson kann durch die Durchgriffsöffnungen 54 hindurch mit jeder Hand in einen betreffenden Handschuh 55 hineinschlüpfen und dann in den Prozessraum 15 eingreifen, ohne dass dessen Schutzgasatmosphäre im Betrieb aufgehoben werden müsste. Unten ist das Prozessraumgehäuse 5 durch die Bodenwand 17 abgeschlossen, wohingegen der obere Abschluss von einem Deckel 56 gebildet wird, der in Fig. 2 erkennbar ist. Der Deckel 56 trägt die Komponenten einer steuerbaren Strahlablenkeinrichtung 58, bei der es sich vorzugsweise um eine galvanometrische Spiegel-Scannereinrichtung handelt, mittels welcher der durch eine Lichtleitfaser 60 zugeführte Strahl des Lasers 13 zur Arbeitsplattform 21 hin ortsselektiv ablenkbar ist, wobei der abgelenkte Strahl durch ein Fenster in dem Deckel 56 bzw. eine f-theta-Linse in dem Deckel 56 hindurch in den Prozessraum 15 eintritt. Der Laser 13 und die Strahlablenkeinrichtung 58 sind Hauptkomponenten der Bestrahlungseinrichtung. Vorzugsweise erfolgt die Kontrolle der Energieverteilung bzw. des momentanen Energieeintrags in die aktuelle Pulverschicht durch Steuerung der Strahlablenkgeschwindigkeit des Laserstrahls.

Der Deckel 56 weist ferner ein schräg vom Prozessrauminneren nach oben und nach vorn hin verlaufendes Rohr 62 auf, welches prozessraumseitig durch ein Fenster abgedichtet ist, welches ein Lichtfilter zur Schwächung von Licht mit der Frequenz des Laserlichtes aufweist. Das Rohr 62 bildet eine Aufnahme und eine Führung für einen Stereomikroskopeinsatz 64, von dem in den Figuren 1 und 2 die Okulare 66 und Fokussiereinstelldrehgriffe 68 erkennbar sind. Das eingesetzte Stereomikroskop 64 erlaubt eine vergrößerte Betrachtung von Vorgängen im Prozessraum 15 und insbesondere von Vorgängen auf der Arbeitsplattform 21 im Arbeitsbereich der von den Durchgriffsöffnungen 54 und den Handschuhen 55 gebildeten Handhabungsvorrichtung. Das Lichtfilter schützt den Beobachter vor der Laserstrahlung. Je nach Bedarf können verschiedene Filtersysteme Verwendung finden, etwa ein Filter für eine Aufsetzkamera für das Stereomikroskop oder einer Spektrometerkamera.

Der in Fig. 1 und Fig. 5 erkennbare und am Gehäuse 3 fixierte Rohrstutzen 92 dient zur Nachfüllung von Werkstoffpulver in den Pulverspender 29.

Zum Aufbau eines Formkörpers in dem Prozessraum 15 wird zunächst das benötigte Werkstoffpulver, z. B. ein Kobalt-Chrom-Pulver oder Stahlpulver in den Pulverspender 29 gefüllt. Die elektronische Steuerung 11 erhält die aufbereiteten bzw. aufzubereitenden CAD-Geometriebeschreibungsdaten des herzustellenden Formkörpers. Schließlich erfolgt als weiterer Vorbereitungsschritt das Spülen und Füllen des Prozessraums 15 mit dem Schutzgas, wobei dies vorzugsweise in der oben bereits angesprochenen Art und Weise im schnellen Überdruckbetrieb erfolgt, wobei mit relativ hohem Druck Schutzgas bei 37 in das Prozessraumgehäuse eingeleitet wird und die vorher darin befindliche Luft über die Öffnung 38 und ein daran angeschlossenes Überdruckventil rasch nach außen verdrängt wird. Ist eine hinreichend gute Schutzgasatmosphäre hergestellt, so kann die weitere Schutzgaszufuhr für den Spülprozess gestoppt werden bzw. auf den Ersatz von Leckverlusten unter Aufrechterhaltung eines Schutzgasdruckes von z. B. ca. 10 mbar beschränkt werden. Dabei kann dann durchaus der Prozessraum vom Schutzgas des Schutzgaskreislaufs durchströmt werden, um etwaigen Prozessrauch abzuführen.

Die Gerätesteuerung 11 steuert den (nicht gezeigten) Vertikalantrieb der Arbeitsplattform 21 so an, dass die Oberseite eines Basissubstrats auf der Arbeitsplattform 21 gegenüber dem Basisniveau des Bodens 17 um das Maß einer ersten gewünschten Pulverschichtdicke abgesenkt wird. Daraufhin steuert die Gerätesteuerung die (nicht gezeigten) Schwenkantriebsmittel der Pulverschichtenpräparierungseinrichtung 23 an, um den Schwenkarm 27 um die Achse 25 zu verschwenken. Beim Überstreichen der Arbeitsplattform 21 gibt der Pulverspender 29 dann Werkstoffpulver auf die Arbeitsplattform. Die Glättungsschieberleiste 31 sorgt für eine gleichmäßige Verteilung und Nivellierung der dabei entstehenden Werkstoffpulverschicht auf der Arbeitsplattform 21. Damit wird erreicht, dass die Oberseite der präparierten Schicht im Wesentlichen auf gleicher Höhe und in Flucht mit dem Basisniveau des Prozessraumbodens 17 liegt. Je nach Prozessführung kann es vorgesehen sein, dass der Schwenkarm 27 eine Hin- und Her-Schwenkbewegung bei jeder Schichtenpräparierung durchführt oder dass er bei jeder Schichtenpräparierung lediglich einmal über die Arbeitsplattform 21 hinwegbewegt wird.

Nachdem die Schichtenpräparierungseinrichtung 23 die Arbeitsplattform 21 wieder freigegeben hat, kommt die Bestrahlungseinrichtung 13, 58 zum Einsatz, wobei der Strahl des Lasers 13 nach Maßgabe von Geometriebeschreibungsdaten für die erste ortsselektiv umzuschmelzende Werkstoffpulverschicht gesteuert wird, so dass sein Strahlauftreffpunkt die umzuschmelzenden Bereiche der Werkstoffpulverschicht abtastet. Üblicherweise bilden die ersten umgeschmolzenen Schichten noch nicht den eigentlich herzustellenden Formkörper, sondern dienen zu dessen Fixierung gegenüber einem Trägersubstrat 70 (vgl. Fig. 6 und 7) auf der Arbeitsplattform 21. Der weitere Aufbau des Formkörpers erfolgt in bekannter Weise schichtweise durch Wiederholung der Schritte der Schichtenpräparierung und ortsselektiven Bestrahlung der jeweils zuletzt präparierten Pulverschicht auf der Arbeitsplattform 21, wobei die umgeschmolzenen Bereiche der aktuell bestrahlten Schicht auch mit den zuvor umgeschmolzenen Bereichen der vorausgegangenen Schicht verschmelzen.

Fig. 6 zeigt eine schematische Momentaufnahme eines Belichtungsschrittes bei der Herstellung von Formkörpern, nämlich zusammenhängenden Zahnersatzteilen 72, 73. Der größte Teil der Zahnersatzelemente 72, 73 ist in der Momentaufnahme gemäß Fig. 6 bereits aufgebaut und ist in dem nicht umgeschmolzenen Restpulver 74 auf der Plattform 21 eingebettet. Mit 76 ist in Fig. 6 der von der Strahlumlenkeinrichtung 58 bewegte, fokussierte Laserstrahl bezeichnet.

Nach dem Aufbau der Zahnersatzelemente 72, 73 können diese im Prozessraum 15 unter Beobachtung durch das Stereomikroskop 64 und unter Verwendung der Handschuhe 55 nachbearbeitet werden. Diesbezüglich sei noch angemerkt, dass gemäß Fig. 1 die Zugriffsöffnungen 54 und auch das Stereomikroskop 64 für die Bedienungsperson offenliegen, auch wenn die Elemente des Außengehäuses gemäß Fig. 1 vollständig angebaut sind. Die Bedienungsperson kann durch manuell zu betätigende Bedienungselemente 78, 80 sowohl die Arbeitsplattform 21 als auch die Bestrahlungseinrichtung 13, 58 steuern. Im Beispielsfall umfassen diese Bedienungselemente unter anderem einen Joystick 78, dessen Auslenkung eine entsprechende Auslenkung des Laserstrahls 76 mittels der Strahlablenkeinrichtung 58 auslöst.

Sind die in Fig. 6 angedeuteten Zahnersatzelemente 72, 73 in ihrer gewünschten Form aufgebaut, so kann die Bedienungsperson den Hubantrieb der Arbeitsplattform 21 in Betrieb setzen, um die Arbeitsplattform 21 auf das allgemeine Basisniveau des Bodens 17 oder darüber hinaus anzuheben. Die Bedienungsperson kann dann nicht umgeschmolzenes Restpulver 74 von der Arbeitsplattform 21 entfernen. Dies kann z. B. unter Verwendung der Handschuhe 55 mittels eines Pinsels, Handfegers oder dgl. erfolgen. Im Prozessraumboden 17 befindet sich eine Pulverentsorgungsöffnung 81, an die eine Auffangflasche 82 angeschlossen ist (vgl. Fig. 2). Die Bedienungsperson kann somit das überschüssige Pulver zur späteren Weiterverwendung in der Auffangflasche 82 sammeln.

Die Zahnersatzelemente 72, 73 liegen dann zur Nachbearbeitung in dem Prozessraum 15 vor. Im Beispielsfall sollen die nach dem SLM-Verfahren hergestellten und zusammenhängenden Zahnersatzelemente 72, 73 mit einem speziellen weiteren Zahnersatzelement 84 zu einer dreigliedrigen Brücke verbunden werden. Wie in Fig. 6 angedeutet, liegt das spezielle weitere Zahnersatzelement 84 bereits während des Ablaufs des SLM-Aufbauprozesses im Prozessraum 15, so dass die Bedienungsperson den Nachbearbeitungsschritt des Verbindens der Elemente 72, 73 und 84 ohne Aufhebung der Schutzgasatmosphäre in dem Prozessraum 15 vornehmen kann. Fig. 7 zeigt eine schematische Momentaufnahme dieses Nachbearbeitungsschrittes. Die Bedienungsperson hat das spezielle Zahnersatzelement 84 z. B. mit einem Zangenwerkzeug oder dgl. an die noch auf dem Substrat 70 auf der Arbeitsplattform fixierten Zahnersatzelemente 72, 73 herangeführt und dann den Laserstrahl 76 unter Verwendung des Joysticks 78 zu der Stelle 86 hin abgelenkt, an der die zusammenhängenden Elemente 72, 73 mit dem speziellen Zahnersatzelement 84 durch Verschweißen verbunden werden sollen. Dabei kann die Bedienungsperson auch die Strahlungsleistung des abgelenkten Laserstrahls 76 so beeinflussen, dass Such-Scanbewegungen zum Heranführen des Laserstrahls 76 an die gewünschte Verbindungsstelle 86 mit verminderter Leistung erfolgen können, so dass dabei noch kein Anschmelzen der Gegenstände 72, 73, 84 stattfindet. Ist der Laserstrahl 76 mit seinem Auftreffpunkt dann an der gewünschten Verbindungsstelle 86 angekommen, kann die Bedienungsperson die Laserstrahlungsleistung so dosieren, dass der Schmelz- bzw. Schweißprozess zwischen den miteinander zu verbindenden Elementen 72, 73, 84 einsetzt.

Die Arbeitsplattform 21 hat einen Drehtelleraufsatz 88, der es der Bedienungsperson erlaubt, die Elemente 72, 73, 84 durch Drehen umzupositionieren. Auch hat die Bedienungsperson die Möglichkeit, die Arbeitsplattform 21 während des Nachbearbeitungsschweißvorgangs anzuheben oder abzusenken, um die Elemente 72, 73, 84 relativ zur Fokalebene des Laserstrahls 76 aufwärts oder abwärts zu bewegen. Auch kann es vorgesehen sein, dass die Fokaleinstellung des Laserstrahls 76 änderbar ist, um die Fläche des Auftreffpunktes und damit die Energiedichte des Laserstrahls 76 pro Flächeneinheit zu variieren, um den Schweißvorgang zu beeinflussen. Wie schon angesprochen, kann dies alles unter Beobachtung durch das Stereomikroskop 64 erfolgen, welches auswechselbar in dem Aufnahmerohr 62 aufgenommen ist. Bedarfsweise kann anstelle des Stereomikroskops oder in Kombination damit auch ein Kameraaufsatz verwendet werden, z. B. ein Hochgeschwindigkeitskameraaufsatz oder ein Videokameraaufsatz, um die Bearbeitungsvorgänge in der Prozesskammer fotografisch bzw. videografisch zu dokumentieren bzw. für einen größeren Personenkreis sichtbar zu maschen.

Mit der erfindungsgemäßen Vorrichtung kann eine Verfahrensvariante durchgeführt werden, bei der beim Aufbau des Formkörpers aus Werkstoffpulver partielle Unterbrechungen, wie Spalten oder Kerben zwischen benachbarten Zonen des Formkörpers vorgesehen werden, um die Ausbreitung von Materialspannungen über Zonen hinweg zu unterdrücken, wobei man solche Unterbrechungen schließlich in einem Nachbearbeitungsvorgang durch Verschweißen in der vorstehend erläuterten Art schließt. In Fig. 7 ist zwischen den beiden miteinander verbundenen Zahnersatzelementen 72, 73 bei 90 eine solche relativ tiefe und schmale Kerbe angedeutet, welche an dem fertig nachbearbeiteten Zahnersatzensemble 72, 73, 84 nicht vorgesehen ist. Diese Kerbe 90 dient dazu, dass bei dem SLM-Prozess auftretende Materialspannungen sich nicht in beachtlichem Maße von dem einen Element 72 auf das andere Element 73 und umgekehrt übertragen können. Auf diese Weise wird verhindert, dass die Form des Ensembles aus den miteinander verbundenen Elementen 72 und 73 durch Verzug von der Sollform abweicht. Wie in Fig. 7 durch den gestrichelt eingezeichneten Laserstrahl 76' angedeutet, kann die provisorische Kerbe 90 im Wege der Nachbearbeitung mit dem Laserstrahl in dem gewünschten Maße zugeschweißt werden. Dies kann mit oder ohne Schweißzusatzwerkstoff erfolgen. Im letzteren Fall wird das Material der Elemente 72, 73 angeschmolzen, um die Kerbe 90 in der gewünschten Weise zu verschließen. Dafür kann bereits während des SLM-Prozesses ein kleiner Materialvorrat in der Nähe der Kerbe 90 angelegt worden sein.

Die Nachbearbeitungsvorgänge können auch noch weitergehend automatisiert werden. Steht z. B. bei miteinander zu verschweißenden Elementen die Verbindungsstelle von vornherein exakt fest, so kann die Laserstrahlsteuerung und/oder die Steuerung der Bewegungen der Arbeitsplattform 21 (Höhenbewegung und Drehbewegung) auch automatisch erfolgen, wobei die Bedienungsperson dann lediglich mittels der Handhabungsvorrichtung dafür Sorge zu tragen hat, dass die miteinander zu verbindenden Elemente in eine vorbestimmte Position zueinander gebracht werden, in der sie dann schließlich miteinander verschweißt werden sollen. Aber auch dieser Positionierungsvorgang kann noch weitgehend automatisiert werden. Die automatische Steuerung eines Nachbearbeitungsschweißvorgangs ganz allgemein ist mit Vorteilen anwendbar, wenn der zuvor nach dem SLM-Verfahren hergestellte Formkörper zunächst in seiner fixierten Lage auf der Arbeitsplattform bzw. deren Drehteller verbleibt, so dass der Steuerungsrechner des Gerätes nach wie vor die exakte Position des betreffenden Formkörpers (72, 73 in Fig. 7) kennt und somit auch ohne weiteres die mittels Laserstrahl nachzubehandelnden Stellen finden kann. Dabei kann die Gerätesteuerung auch laufend eine automatische Fokuseinstellung des Laserstrahls vornehmen.

Nach Abschluss der Nachbehandlung kann dann der insoweit fertiggestellte Formkörper oder Formkörperverbund von dem Trägersubstrat der Arbeitsplattform getrennt und schließlich aus dem Gerät 1 durch die vordere Öffnungstür 42 hindurch herausgenommen werden.

Im Rahmen der vorliegenden Erfindung können auch Varianten liegen, bei denen die Nachbehandlungsstation von der Arbeitsplattform separiert ist. So kann z. B. in dem Prozessraumgehäuse eine Halterungseinrichtung zur Fixierung des nachzubehandelnden Formkörpers in einer bestimmten Orientierung vorgesehen sein. Die Halterungseinrichtung kann eine steuerbare Positionierungseinrichtung umfassen, um die Orientierung eines in der Halterungseinrichtung fixierten Formkörpers relativ zum Sichtfeld der Beobachtungseinrichtung und zu dem dahin ausgerichteten Laserstrahl zu verändern, etwa im Raum zu verdrehen.

Gemäß einer weiteren Variante kann das Prozessraumgehäuse auch eine Schleuse enthalten, wie sie z. B. in der WO 2006/024373 A2 erläutert ist. Auch kann das Gerät 1 mit einer Pulverabsaugeinrichtung ausgestattet sein, welche ein Absaugen des Pulvers aus dem Prozessraum ermöglicht.

Die Erfindung bietet zahlreiche Möglichkeiten des Aufbaus und der Nachbearbeitung von Formkörpern, insbesondere filigranen Formkörpern unter mikroskopischer Beobachtung. Unter dem Begriff Nachbearbeitung soll in der Terminologie der vorliegenden Anmeldung auch das Verschweißen eines nach dem SLM-Verfahren in dem Prozessraum hergestellten Formkörpers mit einem anderen Gegenstand fallen. Dabei können die Gegenstände aus unterschiedlichen, jedoch miteinander verschweißbaren Materialien bestehen. Auch kann die Vorrichtung dazu benutzt werden, Formkörper unabhängig von deren ursprünglichem Aufbauprozess einer Schweißnachbehandlung unter Verwendung der Bestrahlungseinrichtung als Strahlungsquelle zu unterziehen. In diesem Fall wird die klassische SLM-Funktion des Aufbaus des Formkörpers aus Pulver gar nicht genutzt.

Bei dem oben erläuterten Ausführungsbeispiel handelt es sich um ein kompaktes Tischgerät mit einem relativ kleinen und daher schnell zu evakuierenden bzw. mit Schutzgas zu spülenden Prozessraum 15. Auch ist dafür Sorge getragen worden, dass bewegbare Komponenten, wie die Schichtenpräparierungseinrichtung 23 oder Galvanometerspiegel der Strahlablenkeinrichtung 58, eine geringe Masse haben, damit sie trägheitsarm schnell bewegt werden können, um den SLM-Prozess schnell ablaufen lassen zu können.

Für die ortsselektive Bestrahlung der Pulverschichten ist vorzugsweise eine Galvano-Scannervorrichtung vorgesehen, die den Laserstrahl gesteuert ablenkt.

Alternativ oder zusätzlich kann eine Matrixbelichtung unter Verwendung eines oder mehrerer DMD-Spiegelarrays oder einer selbstleuchtenden Lichtquellenmatrix erfolgen.

## Patentansprüche

1. Vorrichtung zur Herstellung von Formkörpern durch schichtweises ortsselektives Umschmelzen oder ggf. Sintern von Werkstoffpulver zu zusammenhängenden Bereichen des Formkörpers durch Energieeintrag mittels Laserstrahlung,
umfassend
ein Gehäuse (5) mit einem darin befindlichen Prozessraum (15),
eine in dem Prozessraum (15) angeordnete Arbeitsplattform (21),
eine Pulverschichtenpräparierungseinrichtung (21) zur Präparierung von aufeinander folgend umzuschmelzenden Werkstoffpulverschichten auf der Arbeitsplattform (21),
eine Bestrahlungseinrichtung (13, 58) mit einem Laser (13) zur Bestrahlung der jeweils zuletzt auf der Arbeitsplattform (21) präparierten Pulverschicht an den zum Umschmelzen bestimmten Stellen nach Maßgabe von Geometriebeschreibungsdaten des Formkörpers,
eine Handhabungsvorrichtung (54) zur bedarfsweisen Manipulation von Elementen in dem Prozessraum (15), und
eine Beobachtungseinrichtung (64) zur visuellen Beobachtung von Vorgängen in dem Prozessraum (15) von außerhalb des Gehäuses (5), **dadurch gekennzeichnet,**
**dass** die Beobachtungseinrichtung (64) wenigstens ein optisches Vergrößerungselement umfasst und auf einen Arbeitsbereich der Handhabungsvorrichtung (54) ausgerichtet bzw. ausrichtbar ist, so dass unter Beobachtung mittels der Beobachtungseinrichtung (64) und unter Verwendung der Handhabungsvorrichtung Nachbearbeitungsschritte an einem im Prozessraum (15) aus Werkstoffpulver hergestellten Formkörper (72, 73) im Arbeitsbereich der Handhabungsvorrichtung (54) vorgenommen werden können, wobei die Beobachtungseinrichtung (64) ein das optische Vergrößerungselement enthaltendes Mikroskop, insbesondere ein Stereomikroskop umfasst.

2. Vorrichtung zur Herstellung von Formkörpern nach Anspruch 1, **dadurch gekennzeichnet, dass** die Bestrahlungseinrichtung (13, 58) eine manuell zu betätigende Bedienungseinrichtung (78, 80) und eine mittels dieser Bedienungseinrichtung (78, 80) manuell steuerbare Strahlausrichtungsvorrichtung (58) umfasst, die dazu eingerichtet ist, die Ausrichtung wenigstens eines Schmelzstrahls bzw. -strahlenbündels der Bestrahlungseinrichtung (78, 80) nach Maßgabe der Betätigung der Bedienungseinrichtung (78, 80) zu ändern, um einen Formkörper (72, 73, 84) in dem Prozessraum mittels des Schmelzstrahls bzw. -strahlenbündels nachzubearbeiten, insbesondere zu schweißen.

3. Vorrichtung zur Herstellung von Formkörpern nach einem der vorhergehenden Ansprüche, **dadurch gekennzeichnet, dass** Pulverentfernungsmittel zur Entfernung von Pulver von der Arbeitsplattform nach Fertigstellung eines Formkörpers und unter Verbleib des Formkörpers für einen Nachbearbeitungsvorgang auf der Arbeitsplattform vorgesehen sind.

4. Vorrichtung zur Herstellung von Formkörpern nach einem der vorhergehenden Ansprüche, **dadurch gekennzeichnet, dass** der Prozessraum eine Schleuse aufweist, welche das Einbringen und das Entfernen von Gegenständen in den bzw. aus dem Prozessraum ohne Zerstörung einer darin befindlichen Schutzgasatmosphäre ermöglicht.

5. Vorrichtung zur Herstellung von Formkörpern nach einem der vorhergehenden Ansprüche, **dadurch gekennzeichnet, dass** die Handhabungseinrichtung in ihrem Arbeitsbereich eine Halterungseinrichtung, insbesondere Klemmeinrichtung, zur Fixierung wenigstens eines Formkörpers in einer vorbestimmten Orientierung aufweist.

6. Vorrichtung nach Anspruch 5, **dadurch gekennzeichnet, dass** die Halterungseinrichtung eine steuerbare Positionierungseinrichtung zur Änderung der Orientierung eines in der Halterungseinrichtung fixierten Formkörpers umfasst.

7. Vorrichtung zur Herstellung von Formkörpern nach einem der vorhergehenden Ansprüche, **dadurch gekennzeichnet, dass** die Handhabungsvorrichtung wenigstens eine Durchgriffsöffnung (54) im Prozessraumgehäuse (5) aufweist, die durch einen den Durchgriff in den Prozessraum (15) von außen her ermöglichenden Handschuh abgedichtet ist.

## Claims

1. Device for producing moulded bodies by selectively remelting or optionally sintering layers of material powder to form connected regions of the moulded body by applying energy by means of laser radiation, comprising a housing (5) having a process chamber (15) located therein, a working platform (21) arranged in the process chamber (15), a powder layer preparation apparatus (21) for preparing material powder layers which are to be consecutively remelted on the working platform, an irradiation apparatus (13, 58) having a laser (13) for irradiating the most recently prepared powder layer on the work platform (21) at the determined remelting points according to data describing the geometry of the moulded body, a handling device (54) for manipulating elements in the process chamber (15) as required, and an observation apparatus (64) for visually observing processes in the process chamber (15) from outside the housing (5),
**characterised in that** the observation apparatus (64) comprises at least one optical magnifying element and is or can be directed towards a work region of the handling device (54) so that, by observing using the observation apparatus (64) and by using the handling device, finishing steps can be carried out on a moulded body (72, 73), produced from material powder in the process chamber (15), in the work region of the handling device (54), the observation apparatus (64) comprising a microscope, in particular a stereo microscope, containing the optical magnifying element.

2. Device for producing moulded bodies according to claim 1, **characterised in that** the irradiation apparatus (13, 58) comprises an operating apparatus (78, 80), which is to be actuated manually, and a beam-orientation apparatus (58) which is manually controllable by means of said operating apparatus (78, 80) and is equipped to change the orientation of at least one melt beam or melt beam bundle of the irradiation apparatus (78, 80) according to the actuation of the operating apparatus (78, 80), in order to finish a moulded body (72, 73, 84) in the process chamber using the melt beam or melt beam bundle, in particular to weld said moulded body.

3. Device for producing moulded bodies according to any of the preceding claims, **characterised in that** powder-removing means are provided on the working platform for removing powder from the working platform once the moulded body is complete and with the moulded body remaining in place in order to undergo a finishing process.

4. Device for producing moulded bodies according to any of the preceding claims, **characterised in that** the process chamber comprises an air lock which allows objects to be introduced into or removed from the process chamber without destroying the inert gas atmosphere therein.

5. Device for producing moulded bodies according to any of the preceding claims, **characterised in that** the handling apparatus comprises in its work region a holding apparatus, in particular a clamping apparatus, for fixing at least one moulded body in a predetermined orientation.

6. Device according to claim 5, **characterised in that** the holding apparatus comprises a controllable positioning apparatus for changing the orientation of a moulded body fixed in the holding apparatus.

7. Device for producing moulded bodies according to any of the preceding claims, **characterised in that** the handling device comprises at least one port (54) in the process chamber housing (5) which is sealed by a glove which allows access into the process chamber (15) from the outside.

## Revendications

1. Dispositif servant à fabriquer des corps moulés par refusion en couches effectuée de manière localement sélective ou éventuellement par frittage de matériau en poudre pour obtenir des zones continues du corps moulé par un apport d'énergie au moyen d'un rayonnement laser,
comprenant
un boîtier (5) pourvu d'une chambre de traitement (15) se trouvant dans ledit boîtier, une plateforme de travail (21) disposée dans la chambre de traitement (15),
un système de préparation de couches de poudre (21) servant à préparer, sur la plateforme de travail (21), des couches de matériau en poudre à faire fondre de manière successive,
un système d'exposition au rayonnement (13, 58) pourvu d'un laser (13) servant à exposer la couche de poudre préparée respectivement en dernier lieu sur la plateforme de travail (21) à un rayonnement au niveau des emplacements définis aux fms de la refusion conformément à des données de description de géométrie du corps moulé,
un dispositif de manipulation (54) servant à manipuler si besoin des éléments dans la chambre de traitement (15), et
un système d'observation (64) servant à observer visuellement des opérations ayant lieu dans la chambre de traitement (15) depuis l'extérieur du boîtier (5),
**caractérisé en ce**
**que** le système d'observation (64) comprend au moins un élément optique d'agrandissement et est orienté ou peut être orienté sur une zone de travail du dispositif de manipulation (54) de sorte qu'il est possible d'effectuer, en observant au moyen du système d'observation (64) et en utilisant le dispositif de manipulation, des étapes de traitement ultérieur au niveau d'un corps moulé (72, 73) fabriqué à partir de matériau en poudre dans une chambre de traitement (15), dans la zone de travail du dispositif de manipulation (54), sachant que le système d'observation (64) comprend un microscope contenant l'élément optique d'agrandissement, en particulier un stéréomicroscope.

2. Dispositif servant à fabriquer des corps moulés selon la revendication 1, **caractérisé en ce que** le système d'exposition à un rayonnement (13, 58) comprend un système de commande (78, 80) à actionnement manuel et un dispositif d'orientation de rayonnement (58) pouvant être contrôlé manuellement au moyen dudit système de commande (78, 80), ledit système d'orientation de rayonnement étant mis au point pour modifier l'orientation d'au moins un rayon de fusion ou d'un faisceau de rayons de fusion du système d'exposition au rayonnement (78, 80) conformément à l'actionnement du système de commande (78, 80), afin d'usiner ultérieurement, en particulier de souder, un corps moulé (72, 73, 84) dans la chambre de traitement au moyen du rayon de fusion ou du faisceau de rayons de fusion.

3. Dispositif servant à fabriquer des corps moulés selon l'une quelconque des revendications précédentes, **caractérisé en ce que** des moyens d'élimination de poudre sont prévus pour éliminer la poudre de la plateforme de travail une fois un corps moulé finalisé et lorsque le corps moulé reste sur la plateforme de travail pour une opération d'usinage ultérieur.

4. Dispositif servant à fabriquer des corps moulés selon l'une quelconque des revendications précédentes, **caractérisé en ce que** la chambre de traitement présente un sas, qui permet d'introduire et de retirer des objets dans ou hors de la chambre de traitement sans détruire une atmosphère de gaz de protection se trouvant dans la chambre de traitement.

5. Dispositif servant à fabriquer des corps moulés selon l'une quelconque des revendications précédentes, **caractérisé en ce que** le système de manipulation présente, dans sa zone de travail, un système de maintien, en particulier un système de serrage, servant à fixer au moins un corps moulé dans une orientation prédéfinie.

6. Dispositif selon la revendication 5, **caractérisé en ce que** le système de maintien comprend un système de positionnement pouvant être réglé servant à modifier l'orientation d'un corps moulé fixé dans le système de maintien.

7. Dispositif servant à fabriquer des corps moulés selon l'une quelconque des revendications précédentes, **caractérisé en ce que** le dispositif de manipulation présente, dans le boîtier (5) de la chambre de traitement, au moins une ouverture de passage (54), qui est rendue hermétique par un gant permuttant d'accéder à la chambre de traitement (15) depuis l'extérieur.
